(19) Europäisches Patentamt
European Patent Office
Office européen des brevets

(11) Publication number: **0 155 047**
**A1**

(12) **EUROPEAN PATENT APPLICATION**

(21) Application number: **85200291.4**

(22) Date of filing: **28.02.85**

(51) Int. Cl.⁴: **C 09 K 11/78**, C 09 K 11/74, C 09 K 11/67, C 09 K 11/64

(30) Priority: **01.03.84 NL 8400660**

(43) Date of publication of application: **18.09.85 Bulletin 85/38**

(84) Designated Contracting States: **DE FR GB NL**

(71) Applicant: **N.V. Philips' Gloeilampenfabrieken, Groenewoudseweg 1, NL-5621 BA Eindhoven (NL)**

(72) Inventor: **Popma, Theo Johan August, c/o INT. OCTROOIBUREAU B.V. Prof. Holstlaan 6, NL-5656 AA Eindhoven (NL)**

(74) Representative: **Evers, Johannes Hubertus Marie et al, INTERNATIONAAL OCTROOIBUREAU B.V Prof. Holstlaan 6, NL-5656 AA Eindhoven (NL)**

(54) **Luminescent screen.**

(57) A luminescent screen provided with a luminescent oxynitride according to the formula $Si_{6-x}Al_xO_xN_{8-x}:A_y$, in which A represents at least one activator from the group Cu, Ag, Zr, Mn, In, Bi and the lanthanides. Up to 75 mol.% of the Al can be replaced by B and/or Ga, whereas $y \leq x \leq 4.5$ and $0.01 \leq y \leq 1.5$.

EP 0 155 047 A1

0155047

Luminescent screen.

The invention relates to a luminescent screen provided with a luminescent nitride.

In the extensive literature with regard to luminescent materials, in which a large number of materials are described, a luminescent nitride is found only incidentally. German Patent Specification 739,390 describes a manganese-activated aluminium nitride (AlN). In Izv. Akad. Nauk SSSR, Neorg. Mater. 1981 17(8), 1421-5 magnesium silicon nitrides ($MgSiN_2$) activated by lanthanides are described. Practical applications of such a luminescent nitride, for example in the luminescent screen of a discharge lamp or of a cathode-ray tube, substantially do not occur.

The invention has for its object to provide luminescent screens provided with novel luminescent materials having a very stable crystal lattice and provided with suitable activator elements.

For this purpose, a luminescent screen according to the invention is provided with a luminescent nitride and is characterized in that the nitride is an oxynitride corresponding to the formula $Si_{6-x}Al_xO_xN_{8-x}:A_y$, in which A represents at least one activator element replacing Al and chosen from the group comprising Cu, Ag, Zr, Mn, In, Bi and the lanthanides, in which up to 75 mol.% of the Al can be replaced by B and/or Ga and in which $y < x < 4.5$ and $0.01 \leq y \leq 1.5$.

It has been found that the oxynitrides of Si and Al form excellent host lattices for the aforementioned activator elements. These oxynitride lattices are known per se; cf. J. Mater. Sci., 11 (1976), 1135-58. A material in the Si-Al-O-N system is known under the designation sialon. The sialons are temperature-resistant ceramic materials. They are derived from silicon nitride ($Si_3N_4$) by replacing simultaneously Si by Al and N by O. Similarly

to the structure of $Si_3N_4$ (occurring in an $\alpha$ phase and a $\beta$ phase), the sialons occur in an $\alpha$ and a $\beta$ crystal structure. They are designated as $\alpha$ sialon and $\beta$ sialon, respectively. As appears from the above formula, at most 75 mol.% of the Si can be replaced by Al ($x \leq 4.5$). With higher Al contents, the sialon crystal structure is in fact no longer obtained. Furthermore, experiments have shown that in the sialons the Al can be replaced by B and/or Ga up to at most 75 mol.%. Higher B and/or Ga contents are not used because then the sialon structure is lost and/or too low luminescence efficiencies are obtained. The activator content y in the luminescent oxynitrides is chosen between the aforementioned limits. At values of y smaller than 0.01 the absorption of the excitation energy is in fact too small, whereas at values of y larger than 1.5 the luminescence efficiency generally becomes too low due to concentration quenching.

The luminescent oxynitrides in a luminescent screen according to the invention can be satisfactorily excited, as has been found, both by ultraviolet radiation and by electrons and also by X-ray radiation. The radiation then emitted is characteristic of the element used as an activator. Such a screen consisting, for example, of a carrier to which the luminescent oxynitride is applied can therefore be used advantageously in discharge lamps, cathode-ray tubes and X-ray screens.

A great advantage of a luminescent screen according to the invention is that the oxynitride used is very stable. In practical applications, it can therefore be subjected to high temperatures and high excitation energy densities. This is naturally of importance, for example, in heavily loaded discharge lamps and heavily loaded cathode-ray tubes. A further advantage of the luminescent oxynitrides is that by means of the O : N ratio the absorption edge of the host lattice and also the absorption band of the activator centre can be adjusted within certain limits. Thus, it is possible to obtain a certain adaptation to the excitation used in a given application.

If the activator element A is not trivalent,

in the case of substitution of Al by A the charge is compensated for by a suitable adjustment of the O : N ratio. Luminescent oxynitrides are preferred, which contain bi- and/or trivalent activators. Therefore, a luminescent screen according to the invention is preferably characterized in that the oxynitride corresponds to the formula $Si_{6-x}Al_{x-p-q}A_p^{2+}A_q^{3+}O_{x+p}N_{8-x-p}$, in which $A^{2+}$ represents at least one activator element from the group comprising Mn, Zr and the bivalent lanthanides and $A^{3+}$ represents at least one activator element from the group comprising In, Bi and the trivalent lanthanides and in which $0.01 \leq x$ $4.5$, $0.01 \leq p+q \leq 1.5$, $0 \leq p \leq 1.5$ and $0 \leq q \leq 1.5$.

The highest efficiencies are generally obtained with luminescent screens provided with an oxynitride having the $\beta$ sialon crystal structure. Such screens are therefore preferred.

The optimum results are obtained if the luminescent screen contains an oxynitride in which $1 \leq x \leq 4$ and the activator content is not lower than 0.05 and not higher than 0.50, i.e. $0.05 \leq y \leq 0.50$ or $0.05 \leq p+q \leq 0.50$.

Embodiments of luminescent screens according to the invention are preferred, in which the activator element is one or more of the trivalent lanthanides. With these activators, the emissions most suitable for practical use are in fact obtained.

The luminescent oxynitrides can generally be obtained by a solid state reaction at a high temperature. Very pure starting materials (for example $Si_3N_4$, $Al_2O_3$ and AlN) are then used. The reaction takes place, for example, for a few hours at a temperature in the range of 1300 - 1600°C in a neutral or weakly reducing atmosphere.

The invention will now be described more fully with reference to a number of examples of luminescent oxynitrides suitable for a luminescent screen according to the invention.

Example 1.

A mixture was made of:

0.7014 g of $Si_3N_4$

0.4333 g of $Al_2O_3$
0.2050 g of AlN
0.0561 g of $Tb_4O_7$
0.2065 g of $CeO_2$.

This mixture was pressed by hand to two pills. The latter were heated in an $Al_2O_3$ crucible in a furnace for 3 hours at a temperature of 1550°C. During heating, a neutral atmosphere was maintained in the furnace by passing a flow (100 cc/min) of pure nitrogen (oxygen concentration smaller than 1 ppm) through the furnace. After cooling, the product was pulverized. The powder obtained was an oxynitride activated by cerium and terbium corresponding to the formula $Si_3Al_{2.7}Ce_{0.24}Tb_{0.06}O_3N_5$, which upon excitation by, for example, ultraviolet radiation exhibited the characteristic Tb emission. An X-ray diffraction analysis showed that the powder had the $\beta$ sialon structure and that only traces of other phases were present.

<u>Example 2.</u>

There was proceeded in quite the same manner as indicated in Example 1. In this case, however, during heating also a quantity of graphite powder was placed in the furnace. As a result, a weakly reducing atmosphere was obtained. The product obtained had the same formula as the product of Example 1 and substantially the same luminescent properties. It was found to have also the $\beta$ sialon structure.

<u>Examples 3 to 27:</u>

In the same manner as described in Example 1 and Example 2, respectively, a large number of luminescent oxynitrides with different activator elements were manufactured. These activators were added in the desired quantity to the starting mixture as oxides or as compounds forming these oxides upon an increase in temperature. The now following Table 1 states for each of the Examples 1 to 27 the formula of the luminescent oxynitride obtained and indicates how the material is prepared. In the column "Preparation", 1 indicates the method according to the

above example 1 (neutral atmosphere) and 2 indicates the method according to Example 2 (weakly reducing atmosphere). Furthermore, Table 1 indicates results of measurements on the luminescent oxynitrides. In the column "$\lambda_{max}$ emission" the location in the spectrum (nm) of the maximum of the emission band is indicated. The column "$\lambda_{exc}$" indicates the wavelength (nm) of the exciting ultraviolet radiation. The column "$\eta_{rel}$" indicates the relative efficiency of the luminescence upon excitation with the wavelength $\lambda_{exc}$ in arbitrary units. $\eta_{rel}$ of Example 1 is then assumed to be 100. Of four examples (1, 5, 24 and 26), an absolute quantum efficiency (in %) upon excitation by 254 nm radiation is further given. These measurements are stated in column "$\eta_{254}$".

Table 1:

| example | formula | preparation | $\lambda_{max}$ emission (nm) | $\lambda_{exc}$ (nm) | $\eta_{rel}$ (with $\lambda_{exc}$) | $\eta_{254}$ (%) |
|---|---|---|---|---|---|---|
| 1 | $Si_3Al_{2.7}Ce_{0.24}Tb_{0.06}O_3N_5$ | 1 | 545 | 310 | 100 | 31 |
| 2 | $Si_3Al_{2.7}Ce_{0.24}Tb_{0.06}O_3N_5$ | 2 | 545 | 310 | 96 | |
| 3 | $Si_2Al_{3.7}Ce_{0.24}Tb_{0.06}O_4N_4$ | 2 | 545 | 310 | 71 | |
| 4 | $Si_4Al_{1.7}Ce_{0.24}Tb_{0.06}O_2N_6$ | 2 | 545 | 310 | 62 | |
| 5 | $Si_5Al_{0.7}Ce_{0.24}Tb_{0.06}ON_7$ | 1 | 545 | 310 | 102 | 24 |
| 6 | $Si_3Al_{2.7}Gd_{0.06}Tb_{0.24}O_3N_5$ | 1 | 545 | 230 | 220 | |
| 7 | $Si_3Al_{2.7}Dy_{0.06}Tb_{0.24}O_3N_5$ | 1 | 545 | 230 | 37 | |
| 8 | $Si_3Al_{2.94}Cu_{0.06}O_{3.12}N_{4.88}$ | 1 | 355 | 300 | 6 | |
| 9 | $Si_3Al_{2.94}Yb_{0.06}O_3N_5$ | 1 | 525 | 270 | 20 | |
| 10 | $Si_3Al_{2.94}Yb_{0.06}O_3N_5$ | 2 | 530 | 270 | 18 | |
| 11 | $Si_3Al_{2.94}Zr_{0.06}O_{3.06}N_{4.94}$ | 1 | 355 | 315 | 5 | |
| 12 | $Si_3Al_{2.94}Mn_{0.06}O_{3.06}N_{4.94}$ | 2 | 415 | 300 | 5 | |
| 13 | $Si_3Al_{2.94}In_{0.06}O_3N_5$ | 1 | 355 | 300 | 4 | |
| 14 | $Si_3Al_{2.94}Ag_{0.06}O_{3.12}N_{4.88}$ | 1 | 545 | 230 | 5 | |
| 15 | $Si_3Al_{2.94}Bi_{0.06}O_3N_5$ | 1 | 355 | 300 | 6 | |
| 16 | $Si_3Al_{1.8}Bi_{1.2}O_3N_5$ | 1 | 415 | 270 | 19 | |
| 17 | $Si_3Al_{2.97}Sm_{0.03}O_3N_5$ | 2 | 685 | 300 | 13 | |
| 18 | $Si_3Al_{2.94}Sm_{0.06}O_3N_5$ | 1 | 740 | 300 | 43 | |
| 19 | $Si_3Al_{2.94}Sm_{0.05}O_3N_5$ | 2 | 740 | 300 | 17 | |
| 20 | $Si_3Al_{2.97}Ce_{0.03}O_3N_5$ | 1 | 450 | 315 | 30 | |
| 21 | $Si_3Al_{2.94}Ce_{0.06}O_3N_5$ | 1 | 440 | 300 | 57 | |
| 22 | $Si_3Al_{2.88}Ce_{0.12}O_3N_5$ | 1 | 460 | 315 | 35 | |
| 23 | $Si_3Al_{2.97}Eu_{0.03}O_{3.03}N_{4.97}$ | 1 | 410 | 270 | 54 | |
| 24 | $Si_3Al_{2.94}Eu_{0.06}O_{3.06}N_{4.94}$ | 1 | 440 | 260 | 47 | 36 |
| 25 | $Si_3Al_{2.88}Eu_{0.12}O_{3.12}N_{4.88}$ | 1 | 410 | 265 | 36 | |
| 26 | $Si_3Al_{2.94}Tb_{0.06}O_3N_5$ | 1 | 543 | 245 | 10 | 22 |
| 27 | $Si_3Al_{2.88}Tb_{0.12}O_3N_5$ | 2 | 543 | 245 | 21 | |

0155047

Examples 28 to 31:

In quite the same manner as indicated in Example 1 (neutral heating atmosphere), luminescent oxynitrides were prepared, in which the aluminium was replaced in part by boron or gallium. Of four of these materials (Examples 28 to 31), the formula is given in Table 2. These four materials were activated by Tb and exhibited the characteristic Tb emission with $\lambda_{max}$ at 543 nm. In the Table, the column "$\lambda_{exc}$" indicates the wavelength of the exciting radiation used in the measurements, while the column "$\eta$" indicates the quantum efficiency (in %) upon excitation by the wavelength $\lambda_{exc}$".

Table 2:

| example | formula | $\lambda_{exc}$ (nm) | $\eta$ (%) |
|---|---|---|---|
| 28 | $Si_3AlTb_{0.5}B_{1.5}O_3N_5$ | 240 | 53 |
| 29 | $Si_3Al_{0.99}Tb_{0.01}B_2O_3N_5$ | 233 | 27 |
| 30 | $Si_4Al_{0.97}Tb_{0.03}BO_2N_6$ | 230 | 29 |
| 31 | $Si_4Al_{0.7}Tb_{0.3}GaO_2N_6$ | 235 | 10 |

1. A luminescent screen provided with a luminescent nitride, characterized in that the nitride is an oxynitride corresponding to the formula

$$Si_{6-x}Al_xO_xN_{8-x}:A_y,$$

in which A represents at least one activator element replacing Al and chosen from the group comprising Cu, Ag, Zr, Mn, In, Bi and the lanthanides, in which up to 75 mol.% of the Al can be replaced by B and/or Ga and in which $y \leq x \leq 4.5$ and $0.01 \leq y \leq 1.5$.

2. A luminescent screen as claimed in Claim 1, characterized in that the oxynitride corresponds to the formula

$$Si_{6-x}Al_{x-p-q}A_p^{2+}A_q^{3+}O_{x+p}N_{8-x-p},$$

in which $A^{2+}$ represents at least one activator element from the group comprising Mn, Zr and the bivalent lanthanides and $A^{3+}$ represents at least one activator element from the group comprising In, Bi and the trivalent lanthanides and in which

$0.01 \leq x \leq 4,5$, $0.01 \leq p+q \leq 1.5$, $0 \leq p \leq 1.5$ and $0 \leq q \leq 1.5$.

3. A luminescent screen as claimed in Claim 1 or 2, characterized in that the oxynitride has the β sialon crystal structure.

4. A luminescent screen as claimed in Claim 1 or 3, characterized in that $1 \leq x \leq 4$ and $0.05 \leq y \leq 0.50$.

5. A luminescent screen as claimed in Claim 2 or 3, characterized in that $1 \leq x \leq 4$ and $0.05 \leq p+q \leq 0.50$.

6. A luminescent screen as claimed in Claim 2, 3 or 5, characterized in that p = 0 and $A^{3+}$ represents at least one of the trivalent lanthanides.

European Patent Office

# EUROPEAN SEARCH REPORT

0155047

Application number

EP 85 20 0291

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| D,A | DE-C- 739 390 (BEKK & KAULEN)<br>* Whole document *<br>----- | 1 | C 09 K 11/78<br>C 09 K 11/74<br>C 09 K 11/67<br>C 09 K 11/64 |
| | | | TECHNICAL FIELDS SEARCHED (Int. Cl.4) |
| | | | C 09 K 11/00 |

The present search report has been drawn up for all claims

| Place of search | Date of completion of the search | Examiner |
|---|---|---|
| THE HAGUE | 30-05-1985 | DROUOT M.C. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document